# EUROPEAN PATENT APPLICATION

(11) **EP 4 317 769 A1**
(43) Date of publication of application: **07.02.2024**
(21) Application number: 23187768.9
(22) Date of filing: 26.07.2023
(51) Int. Cl.: F21S 10/00, F21V 14/00, F21V 17/02, G03B 21/14

(54) **A GOBO PROJECTOR AND A METHOD FOR USING A GOBO PROJECTOR**

(30) Priority: 04.08.2022 IT 202200016704
(71) Applicant: Sunland Optics Srl, 89121 Reggio Calabria (RC) (IT)
(72) Inventor: DE FRANCO, LUCA ANTONIO, 89131 REGGIO CALABRIA (IT)
(74) Representative: Conti, Marco

(57) **Abstract**

A gobo projector (1), comprises: a light source (31); a heat sink (33); an optical assembly (21); a frame (4); a mounting assembly (40), configured to receive a gobo (51) having a flat shape and extending in a plane (E), wherein the heat sink (33), the light source (31), the mounting assembly (40), and the optical assembly (21) are aligned along a longitudinal axis (X), and wherein the mounting assembly (40) is configured to vary an inclination of the plane (E) of the gobo (51) relative to a reference plane (R) perpendicular to the longitudinal axis (X).

## Description

This invention relates to a gobo projector and to a method for using a gobo projector.

Known in the prior art are traditional gobo projectors in which the focal point of the gobo projector can be adjusted by moving an optical assembly; this movement shifts the focal point along the direction of the optical axis of the gobo projector. However, if there are projection surfaces which are inclined with respect to the perpendicular to the optical axis, these gobo projectors are unable to focus the image correctly.

For a generic projection system, patent document CN110630985A addresses the problem of light distribution uniformity but not that of focusing images projected on inclined surfaces. Patent document US6262838B1 describes a system, applied to the microscope sector, in which the focal plane can be inclined by rotating an optical system about a hinge.

Examples of gobo projectors are described in patent documents EP2918899A1, US6152577 and WO2004/046607A1; these documents, however, fail to provide solutions that satisfy market needs.

The aim of this disclosure is to provide a gobo projector and a method for using a gobo projector to overcome the above mentioned disadvantages of the prior art.

In particular, the aim of this disclosure is to provide a gobo projector and a method for using a gobo projector which allow uniformly focusing the entire image even when projected on a surface which is inclined in any direction.

This aim is fully achieved by the gobo projector and the method for using the gobo projector of this disclosure as characterized in the appended claims.

In particular, the gobo projector comprises a light source. The light source may, for example, comprise an incandescent or fluorescent light source or, more preferably, a LED source. The gobo projector comprises a heat sink. The heat sink is configured to cool the gobo projector. For this purpose, the heat sink may include a fan. Preferably, the heat sink is positioned in the proximity of the light source.

In an embodiment, the gobo projector comprises a collimator. The collimator may comprise a lens for collimating, that is, rectifying, a bundle of rays coming from the light source. Preferably, the collimator comprises a plurality of lenses for collimating a bundle of rays coming from the light source. The lenses of the plurality of lenses may be concave and/or convex. In addition, or alternatively, the collimator may comprise a parabolic device or a plurality of parabolic devices configured to rectify a bundle of rays coming from the light source. The gobo projector comprises an optical assembly. In an example, the optical assembly includes a lens or a plurality of lenses.

The gobo projector comprises a frame.

The gobo projector comprises a mounting assembly, configured to receive a gobo having a flat shape, that is, a flattened or planar shape, extending in a plane. Preferably, the heat sink, the light source, the mounting assembly and the optical assembly (and also when present, the collimator) are aligned along a longitudinal axis. The heat sink may be aligned along the longitudinal axis. In an example, the mounting assembly is configured to receive a single gobo. The gobo may be aligned along the longitudinal axis. The gobo may be connected (directly or indirectly) to the mounting assembly in such a way that it is free to rotate about an axis through its centre, relative to the mounting assembly. The gobo may be connected (directly or indirectly) to the mounting assembly mechanically or magnetically.

The mounting assembly is configured to vary an inclination of the gobo (in particular, to vary an inclination of the gobo plane) for example relative to a reference plane perpendicular to the longitudinal axis. In this case, it is noted that without varying the inclination of the gobo, that is, without varying the gobo plane, the gobo plane and the reference plane form an angle of 0° with each other; by varying the inclination of the gobo, that is, by varying the gobo plane, the gobo plane and the reference plane form an angle different from 0°. In other words, the mounting assembly may be configured to vary an inclination of the gobo plane relative to the longitudinal axis, that is to vary an angle between the gobo plane and the longitudinal axis. In this case, it is noted that without varying the inclination of the gobo, the gobo plane and the longitudinal axis form an angle of 90°; by varying the inclination of the gobo, that is, by varying the gobo plane relative to the longitudinal axis, the gobo plane and the longitudinal axis form an angle different from 90°. Without varying an inclination of the gobo plane, the focal plane of the gobo projector is perpendicular to the longitudinal axis (also called optical axis) and the focus point of the gobo projector is aligned with the longitudinal axis. Varying the inclination of the gobo plane makes it possible to incline the focal plane of the gobo projector relative to the condition in which it perpendicular to the longitudinal axis, and the focus point is shifted relative to the longitudinal axis. Thus, suitably inclining the gobo plane allows an image to be correctly projected on an inclined surface. As to the frame, various different embodiments are imaginable; a possible embodiment of the frame is provided in patent application 102022000012596, in the name of the present Applicant and incorporated herein by reference. In this case, the present invention is nevertheless applied; in particular, the front mount or the rear mount, whichever is the mount used to house the gobo, may be configured to vary the inclination of the gobo plane relative to a reference plane perpendicular to the longitudinal axis.

In an embodiment, the mounting assembly comprises an adapter, configured to receive the gobo. The mounting assembly may be configured to receive the adapter. For example, the mounting assembly may be configured to receive a single adapter, preferably so that the adapter is aligned along the longitudinal axis (that is, so that a centre of the adapter or a centre of the gobo is aligned along the longitudinal axis). Preferably, the mounting assembly comprises a mount. The mount may be configured to receive the adapter, that is to say, the adapter may be connected to the mount. Preferably, the adapter is connected to the mount removably. The adapter may be connected (directly or indirectly) to the mount in such a way that the adapter is free to rotate about an axis through its centre relative to the mount. The adapter may be connected (directly or indirectly) to the mount mechanically or magnetically. In an example, the adapter is inclinable relative to the mount to vary the inclination of the gobo plane. In another example, the gobo is directly connected to the mount and the mount is configured to vary the inclination of the gobo plane. In another example, the gobo is directly connected to the mount and the mount is inclinable relative to the mounting assembly to vary the inclination of the gobo plane.

The mount may be in the shape of a ring, comprising an outer edge that is larger in diameter than the inner edge, where the inner edge defines a housing for the adapter or for the gobo. In another example, the mount may be in the shape of a half ring, comprising a housing for receiving the adapter or for receiving the gobo. In yet another example, the mount is defined by one or more guides, configured to receive the adapter or the gobo in a coupling relationship; in this case, the mounting assembly comprises two or more guides and the inclination of the adapter or of the gobo can be varied, for example by varying the position of the adapter or of the gobo relative to the two or more guides.

In an example, the mount comprises a plurality of housings, each configured to directly receive a corresponding plurality of adapters or of gobos; the mount may be planar and circular in shape and be rotatable about a central axis of rotation to align one of the gobos of the plurality with the longitudinal axis. In this case, the mount may be configured to incline each adapter (or each gobo plane if there is no adapter).

The mounting assembly may comprise a spacer (or a plurality of spacers) configured to vary an inclination of the gobo plane relative to a reference plane perpendicular to the longitudinal axis.

In an embodiment, the mounting assembly comprises a plurality of spacers, where each spacer is configured to vary a distance between the mount and the adapter, or between the mount and the gobo. Preferably, the spacers are located around the longitudinal axis. In another example, the spacers are located around the gobo or around the adapter, that is, around an axis parallel to the longitudinal axis. The spacers, therefore, have the function of varying the inclination of the gobo projector plane by varying the distance between the mount and the adapter. In effect, the spacers are located on a perimeter of the mount, around the longitudinal axis (or around an axis parallel to the longitudinal axis). Each spacer is preferably configured to vary a distance between mount and adapter independently of each of the other spacers. Preferably, the plurality of spacers comprises at least one pair of spacers, located at diametrically opposite positions relative to the gobo (which is circular in shape), that is to say, they are located on a perimeter surrounding the gobo and mutually spaced apart. More preferably, the plurality of spacers comprises at least a first and a second pair of spacers, located on a perimeter surrounding the gobo and mutually spaced apart.

The spacer (or each spacer of the plurality) is configured to vary a distance between the mount and the gobo in a (constant) stepless manner or constantly in stages (for example, in discrete steps). Thus, each spacer (or the spacer) may be rotatable about its axis or it may be configured to be pushed or pulled relative to its axis so as to vary the inclination of the gobo (that is, so as to vary a distance between the mount and the gobo) in a (constant) stepless manner. Preferably, varying the inclination of the gobo plane is done without removing the gobo from the mounting assembly or without removing the adapter from the mounting assembly or without removing the adapter from the mount. In particular, the mounting assembly may comprise an open space, open to the outside and accessible so as to vary the inclination of the gobo plane, in particular to vary the inclination of the adapter relative to the mount. In an example, the mount has a front face and a rear face opposite the front face. The front face or the rear face may be configured to connectably receive the adapter or to receive the gobo directly. The mount may comprise a plurality of through holes extending between the front face and the rear face. Each through hole may be configured to receive a spacer of the corresponding plurality of spacers. Preferably, each spacer comprises a shank extending between a first end and a second end. For example, the second end may be operatively in contact with the adapter (or with the gobo). The first end may be protrudent from the rear face of the mount. Thus, the first end may be accessible to an operator manually or to an actuator. The first end may be accessible to an operator manually (from the open space) or to an actuator, so that the inclination of the gobo plane can be varied, preferably without removing the gobo from the mounting assembly.

In an example embodiment, each spacer shank has a threaded coupling that connects it to the corresponding through hole, so that each spacer can be extended or retracted along its own axis, parallel to the longitudinal axis, by rotation about its axis. In another example, each spacer is extended or retracted along its axis parallel to the longitudinal axis by being pushed or pulled around its axis.

In an embodiment, each spacer of the plurality of spacers includes a gripping element, preferably at the first end of the shank, so that it can be adjusted manually. It is therefore easy for an operator to rotate the spacer using the gripping element; the spacer rotates about the axis of the shank so as to adjust a distance between mount and adapter (or between mount and gobo) along the axis of the shank.

In an example embodiment, the mounting assembly comprises a flange.

The mounting assembly may comprise a plurality of spacing members, each located between the mount and the flange. Preferably, each spacing member is located around the longitudinal axis. Each spacing member is configured to space the mount and the flange from each other along the longitudinal axis. Preferably, the plurality of spacing members defines an open space accessible from the outside of the gobo projector. In an example, the spacing members are configured to align the flange and the mount with each other.

In an example, the mount comprises a plurality of magnetic elements configured to couple the adapter magnetically to the mount, or to couple the gobo magnetically to the mount. In another example, the adapter (or the gobo) is connected to the mount mechanically, for example, by slotting matching surfaces to each other, or the adapter (or the gobo) may be connected to the mount by gluing.

In an embodiment, the frame comprises a first and a second rod. The first and the second rod may be disposed around the longitudinal axis. The first and the second rod extend between a first end and a second end. Preferably, the optical assembly is connected to the first end of the first and second rod. The optical assembly may move, relative to the mount, in translation along the longitudinal axis. The first and the second rod may each comprise a blocking element, configured to lock the optical assembly in position along the longitudinal axis. The second end may be connected to the mount of the mounting assembly.

In an embodiment, the optical assembly is connected to the frame. The frame may comprise a threaded portion to receive the optical assembly so that the optical assembly can be moved in translation along the longitudinal axis.

In an example embodiment, the adapter is pivotally connected to the mount to rotate about a first axis, where the first axis is transverse to the longitudinal axis. Alternatively, the gobo may be connected to the mount to rotate about a first axis which is transverse to the longitudinal axis.

Rotation about the first axis allows the gobo plane to be inclined. In an example, the mount comprises a first ring, having a first diameter, and the adapter is pivotally connected to the first ring to rotate about the first axis. The mount may comprise a second ring, having a second diameter which is larger than the diameter of the first ring, where the first ring is positioned concentrically with the second ring and the adapter is positioned concentrically with the first ring. The second ring may be pivotally connected to the first ring to rotate about a second axis, where the second axis is transverse to the longitudinal axis. Preferably, the second axis does not coincide with the first axis, and more preferably, the second axis is transverse to the first axis. That way, the gobo plane can be inclined relative to the reference plane which is perpendicular to the longitudinal axis.

In an embodiment, the mount is configured to receive the gobo and the mount may be movably connected to the frame so it can be inclined, for example in one or more ways described in this disclosure.

In an example, the gobo projector comprises a base. The base may be configured to be fixed to a wall by means of fastening elements which an expert in the trade is generally familiar with. The frame is preferably pivoted to the base to rotate about an axis of rotation which is transverse to the longitudinal axis. In an example, the gobo projector comprises a tightening element configured to lock the frame at a desired angular position. The tightening element may comprise a set screw to fix the angular position.

This disclosure also provides a method for using a gobo projector, where the gobo projector is made according to one or more aspects of this disclosure. Preferably, the gobo projector comprises a light source, a heat sink, an optical assembly, a frame and a mounting assembly. Preferably, the heat sink, the light source, the mounting assembly and the optical assembly are aligned along a longitudinal axis.

The method comprises a step of fitting a gobo, having a flat shape and extending in a plane, in the mounting assembly. In particular, when the gobo is fitted in the mounting assembly, the light source, the gobo and the optical assembly are aligned along the longitudinal axis. The method may comprise a step of fitting a single gobo, preferably in such a way that its centre is aligned with the longitudinal axis. The gobo may be fitted in such a way that it remains free to rotate about an axis through its centre, relative to the mounting assembly. The method may comprise a step of connecting the gobo (directly or indirectly) to the mounting assembly mechanically or magnetically. The method may comprise a step of varying an inclination of the gobo (in particular, an inclination of the gobo plane) for example relative to a reference plane perpendicular to the longitudinal axis.

In an embodiment, the mounting assembly comprises an adapter and the step of fitting the gobo incudes a step of positioning the gobo in the adapter. The method may include a step of fitting the adapter to the mounting assembly, preferably in such a way that the adapter is aligned along the longitudinal axis (that is, so that a centre of the adapter or of the gobo is aligned along the longitudinal axis). The mounting assembly may include a mount and the step of fitting the gobo may include a step of connecting the adapter to the mount. Alternatively, the method may comprise a step of fitting the gobo directly to the mount. The method may include a step of fitting or connecting the adapter (directly or indirectly) to the mount in such a way that the adapter is free to rotate about an axis through its centre relative to the mount. The connection may be mechanical or magnetic. The step of inclining the gobo plane may include a step of spacing the adapter from the mount to vary the inclination of the gobo plane. In another example, the step of inclining the gobo plane may include a step of spacing the mount (for example, relative to the mounting assembly) to vary the inclination of the gobo plane. Alternatively, the step of inclining the gobo plane may include a step of inclining the gobo plane relative to the mount. In an example, the mount comprises a plurality of housings and the step of fitting the gobo may include a step of connecting a corresponding plurality of adapters (or directly a corresponding plurality of gobos) in the plurality of housings. The method may include a step of rotating the mount about a central axis for rotating and aligning the gobo of the plurality of gobos along the longitudinal axis.

The mounting assembly may comprise a spacer (or a plurality of spacers). The method may comprise a step of varying the inclination of the gobo plane using the spacer (or the plurality of spacers).

In an embodiment, the mounting assembly comprises a plurality of spacers, preferably located around the longitudinal axis. The step of inclining may include a step of spacing the mount and the adapter from each other by a certain distance via the plurality of spacers. In another example, the step of inclining includes a step of spacing the mount and the gobo from each other by a certain distance via the plurality of spacers. The method may comprise a step of varying a distance between the mount and the gobo via the spacer or the plurality of spacers, for example in a (constant) stepless manner or constantly in discrete steps. The method may comprise a step of rotating the spacer or the plurality of spacers about its axis or a step of pushing or pulling it relative to its axis so as to vary the inclination of the gobo (that is, so as to vary a distance between the mount and the gobo) in a (constant) stepless manner. Preferably, the step of varying the inclination of the gobo plane is carried out without removing the gobo from the mounting assembly or without removing the adapter from the mounting assembly or without removing the adapter from the mount. The mounting assembly may comprise an open space, open to the outside and accessible so as to vary the inclination of the gobo or of the adapter relative to the mount.

In an example, the mount has a front face and a rear face opposite the front face, and the method comprises a step of coupling the adapter to the front face of the mount. The mount may comprise a plurality of through holes extending between the front face and the rear face, and each spacer may comprise a shank extending between a first end and a second end. The method may comprise a step of receiving a spacer of the plurality of spacers in a corresponding through hole. The through hole may be coupled to the spacer by a threaded coupling. The second end of the spacer may be operatively in contact with the adapter and the first end may be protrudent from the rear face of the mount. The method may comprise a step of extracting and retracting a spacer along an axis of the shank, parallel to the longitudinal axis, for example by rotation about the axis of the shank or by pushing or pulling the shank along the axis of the shank. The step of extracting and retracting may be carried out by an operator or by an actuator. The method may comprise a step of varying the inclination manually or via an actuator by manipulating or driving the first end of the spacer, preferably without removing the gobo from the mounting assembly.

In an embodiment, each spacer includes gripping element, preferably at the first end of the shank, and the method comprises a step of manually adjusting the spacer, using the gripping element.

In an example embodiment, the mounting assembly comprises a flange and a plurality of spacing members, each located between the mount and the flange to space the mount and the flange from each other along the longitudinal axis. The plurality of spacing members preferably defines an open space and the method may comprise a step of manually adjusting the spacing members through the open space.

The method may comprise a step of moving the optical assembly in translation along the longitudinal axis, where the optical assembly is connected to a first end of a first and a second rod located around the longitudinal axis. The method may include a step of locking the optical assembly in position along the longitudinal axis by means of a blocking element on the first and the second rod.

In an example, the method comprises a step of pivotally connecting the adapter (or the gobo) to the mount and rotating the adapter about a first axis that is transverse to the longitudinal axis. The method may comprise a step of rotating the adapter about a first axis relative to a first ring, and rotating the first ring relative to a second ring about a second axis that is transverse to the longitudinal axis and different from the first axis.

In an embodiment, the method comprises a step of connecting the gobo to the mount and a step of varying the inclination of the mount relative to the frame, for example according to one or more modes described in thus disclosure.

This and other features will become more apparent from the following description of a preferred embodiment, illustrated purely by way of nonlimiting example in the accompanying drawings, in which:

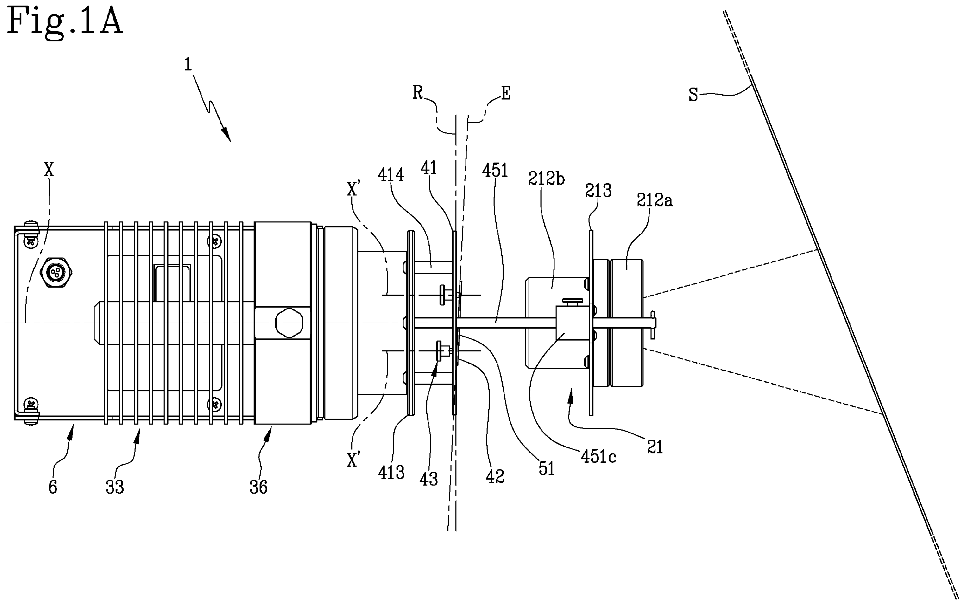

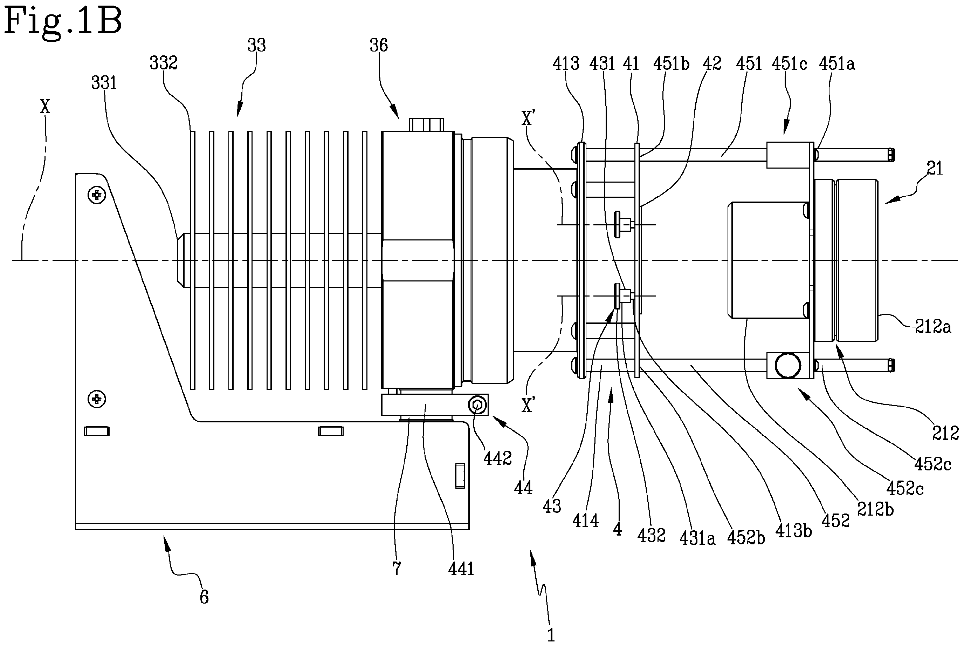

- Figures 1A and 1B show a gobo projector according to one or more aspects of this disclosure;

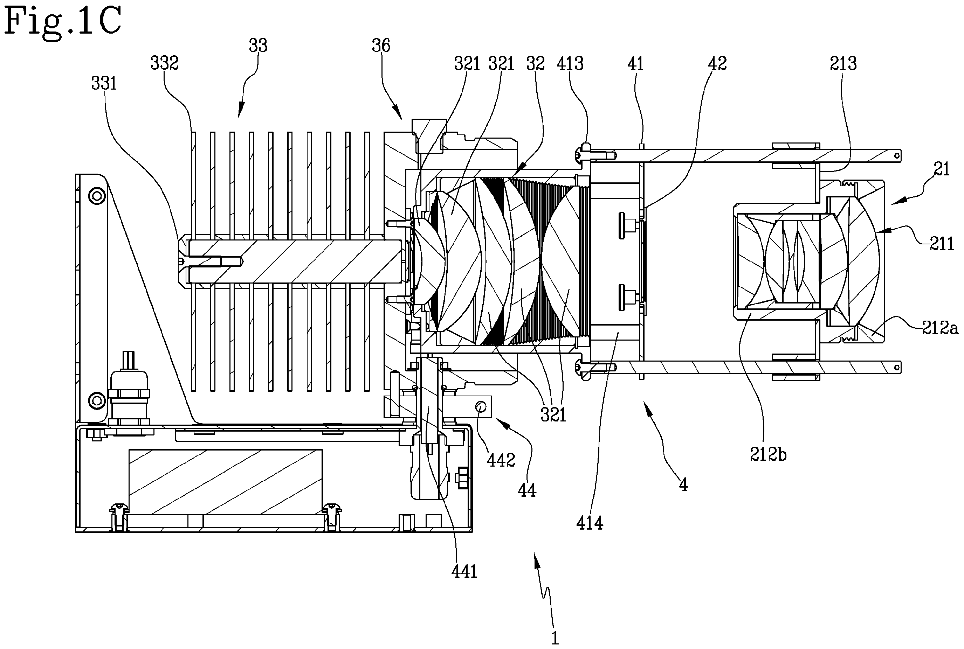

- Figure 1C shows a cross section of a gobo projector according to one or more aspects of this disclosure;

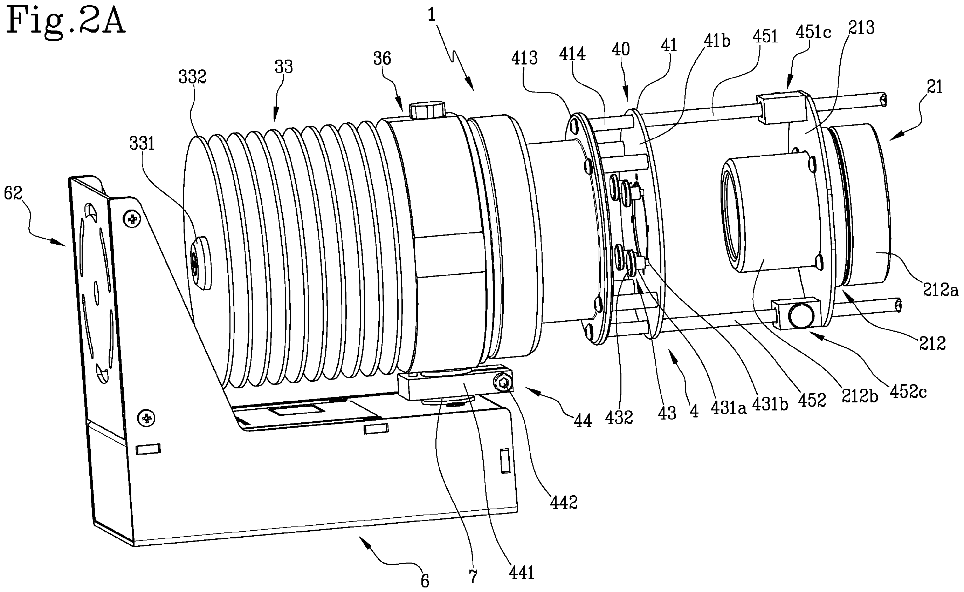

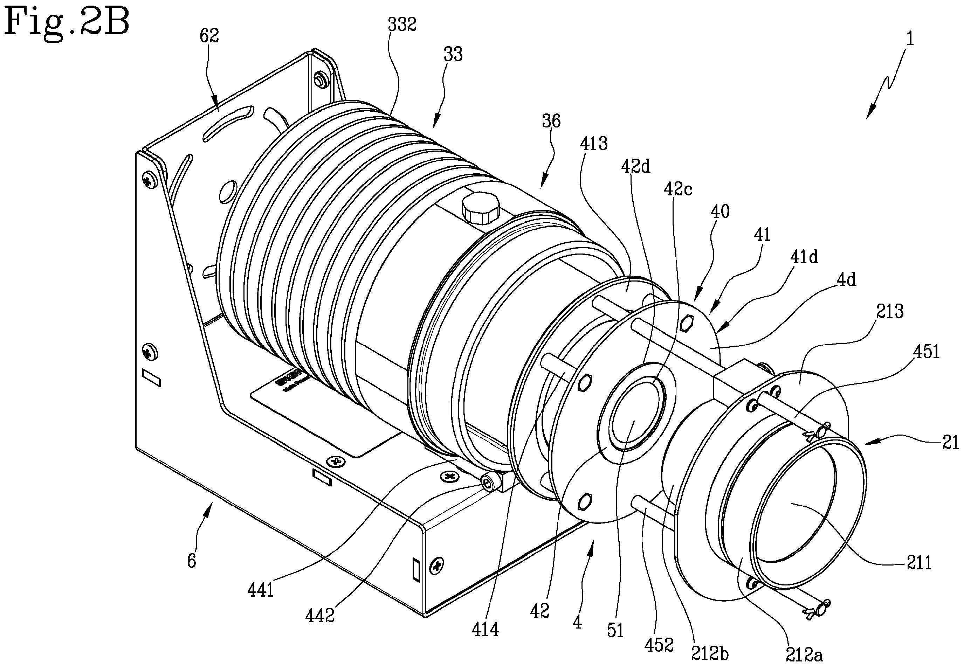

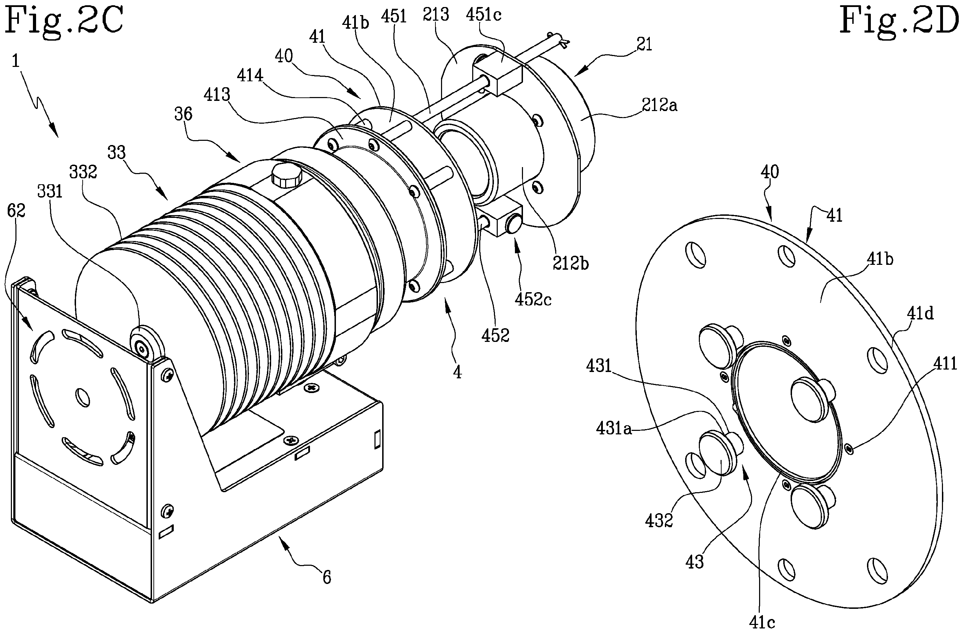

- Figures 2A, 2B and 2C show a gobo projector according to one or more aspects of this disclosure;
- Figure 2D shows a mount according to one or more aspects of this disclosure;

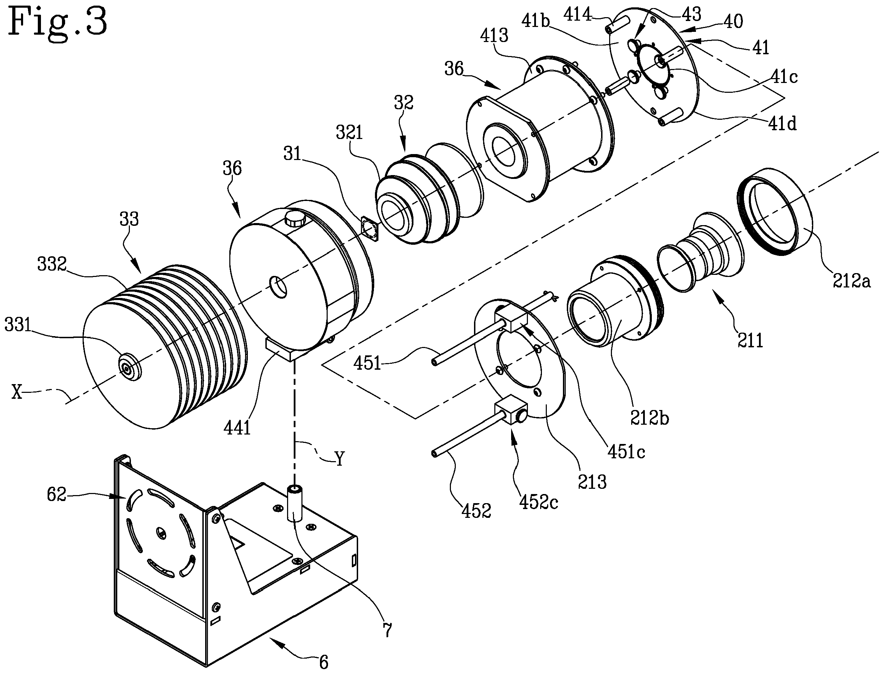

- Figure 3 shows an exploded view of a gobo projector according to one or more aspects of this disclosure.

The numeral 1 in the drawings denotes a gobo projector. The gobo projector 1 comprises a LED light source 31 and a heat sink 33 for the LED light source 31. The heat sink 33 comprises a pin 331 and a plurality of flanges 332 mounted to the pin at a predetermined distance from each other. The gobo projector 1 comprises a collimator 32 that includes a plurality of collimating lenses 321. The gobo projector 1 comprises an optical assembly 21, including a plurality of lenses 211 and a support 212 for the plurality of lenses.

The gobo projector 1 comprises a frame 4. The frame 4 includes a mounting element 36, connected to the heat sink 33 and configured to house the LED light source 31 and the collimator 32. The gobo projector 1 comprises a mounting assembly 40, configured to house a gobo 51.

In a preferred example, the mounting assembly 40 comprises a mount 41. The mount 41 has a flat shape and comprises a front face 41a and a rear face 41b. In particular, the mount 41 has the shape of a ring, comprising an inner edge 41c and an outer edge 41d which is larger in diameter than the inner edge 41c. The mounting assembly 40 comprises an adapter 42, configured to receive a gobo 51. The adapter 42 is fixed to the front face 41a of the mount 41. In a preferred example, the mount 41 comprises a plurality of magnetic elements 411, disposed between the inner edge 41c and the outer edge 41d and configured to magnetically couple the adapter 42 to the mount 41. The mount 42 also has the shape of a ring, comprising an inner edge 42c and an outer edge 42d which is larger in diameter than the inner edge 42c. The inner edge 42c defines a housing adapted to accommodate a gobo 51, where the gobo 51 has a flat shape and extends in a plane E. The heat sink 33, the LED light source 31, the collimator 32, the mounting assembly 40 (hence the mount 41, the adapter 42 and the gobo 51), and the optical assembly 21 are aligned along a longitudinal axis X.

The mounting assembly 40 comprises a plurality of spacers 43 and the mount 41 comprises a plurality of through holes extending between the front face 41a and the rear face 41b of the mount 41. Each through hole is adapted to receive a spacer 43 of the plurality of spacers 43, coupled to it by a threaded coupling. Each spacer 43 comprises a shank 431, extending between a first end 431a and a second end 431b, where the first end 431a is operatively in contact with the adapter 42 when the adapter 42 is fixed to the mount 41. The second end 431b is protrudent from the rear face 41b of the mount 41 and comprises a gripping element 432. The gripping element 432 can be rotated manually by an operator about an axis X' of the shank, where the shank axis X' is parallel to the longitudinal axis X. By rotating the gripping element 432, hence rotating the spacer 43, about the shank axis X', the spacer 43 is extracted and retracted inside the corresponding through hole, along the shank axis X'. The plurality of spacers 43, like the corresponding plurality of through holes, are located around the longitudinal axis X, where the spacers 43 are angularly spaced from each other by a preset distance.

The mounting assembly 40 comprises a flange 413. The flange 413 is connected to the frame 4 at the mounting element 36. The mounting assembly 40 comprises a plurality of spacing members 414, located between the mount 41 and the flange 413 and are spaced from each other around the longitudinal axis X. Each spacing member 414 is configured to space the mount 41 and the flange 413 from each other to define an open space that is accessible from the outside of the gobo projector 1.

In an example not illustrated, the gobo projector 1 comprises a front cover, configured to at least partly cover the optical assembly 21 and the mounting assembly 40. When the front cover is present, it must be removed to gain access to the open space between the mount 41 and the flange 413. In particular, the spacing members 414 connect the flange 413 to the front face 41b of the mount 41; that way, the plurality of spacers 43 is accessible through the open space. The gobo projector 1 comprises a base 6 that comprises a wall-mounting system 62. The base 6 is pivoted to the frame 4 by a pin 7 which is located at the mounting element 36 (that is to say, the pin 7 connects the mounting element 36 of the frame 4 to the base 6). The pin 7 allows the frame 4, hence the gobo projector 1, to rotate about an axis of rotation Y, transverse to the longitudinal axis X. The pin 7 is connected to the base 6 and to the mounting element 36 by a customary fastening system known to anyone familiar with the trade.

The gobo projector 1 comprises a tightening element 44, configured to lock the frame 4 (and the gobo projector 1) at a desired angular position. In an example, the tightening element 44 comprises a clamp 441 and a screw 442 to tighten the clamp 441 around the pin 7 so as to prevent the frame 4 and the gobo projector 1 from rotating about the axis of rotation Y.

The frame 4 comprises a first rod 451 and a second rod 452, spaced from each other around the longitudinal axis X. The first rod 451 and the second rod 452 each extend between a first end 451a, 452a and a second end 451b, 452b. The optical assembly 21 is connected to the first end 451a, 452a of the first rod 451 and second rod 452. In particular, the optical assembly 21 comprises a flange 213 that surrounds the support 212 of the optical assembly 21. The support 212 is connected to the flange 213 of the optical assembly 21 by means of fastening screws. The flange 213 of the optical assembly 21 includes a first and a second through hole to accommodate the first rod 451 and the second rod 452. The flange 213, and in particular, the optical assembly 21, is configured to move in translation relative to the mount 41 along the longitudinal axis X. The first rod 451 and the second rod 452 respectively comprise a first blocking element 451c and a second blocking element 452c. The first blocking element 451c and the second blocking element 452c each comprise a set screw to lock the optical assembly in position along the longitudinal axis X. The second end 451b and 452b of the first rod 451 and second rod 452 are connected to the mount 41 of the mounting assembly 4. The support 212 of the optical assembly 21 comprises a front portion 212a, configured to accommodate a first group of lenses 211 of the plurality, and a rear portion 212b to accommodate a second group of lenses 211 of the plurality. The support 212 comprises threading to couple the front portion 212a and the rear portion 212b and to move the front portion 212a in translation relative to the rear portion 212b along the longitudinal axis X. Operatively, an operator fits the gobo 51 in the housing delimited by the inner edge 42c of the adapter 42 (by mechanically or magnetically coupling together the gobo 51 and the adapter 42) and couples the adapter 42, together with the gobo 51, to the front face 41a of the mount 41 (in particular, by a magnetic coupling). By rotating the gripping elements 432 of the spacers 43, the operator adjusts the distance between the mount 41 and the adapter 42, which is in contact with the second end 431b of the shank 431 and which, by moving in translation along the longitudinal axis X, pushes the adapter 42 away from the mount 41. Each spacer 43 is adjustable independently of the other spacers 43 so that the gobo plane E can be inclined relative to a reference plane R perpendicular to the longitudinal axis X and thus, the focal plane of the gobo projector 1 can be inclined relative to the reference plane R (necessary when the reference plane R is not parallel to a projection surface S). The operator may also move the focal point of the gobo projector 1 along the longitudinal axis X by translating the optical assembly 21 along the first rod 451 and second rod 452 and fix the focal point along the longitudinal axis X using the first blocking element 451c and the second blocking element 452c (in particular by turning the screws thereof). The operator may also rotate the frame 4 about the axis of rotation Y relative to the base 6 and set the angular position of the frame 4 using the clamp 441.

## Claims

1. A gobo projector (1), comprising:
- a light source (31);
- a heat sink (33);
- an optical assembly (21);
- a frame (4);
- a mounting assembly (40), configured to receive a gobo (51) having a flat shape and extending in a plane (E),
wherein the heat sink (33), the light source (31), the mounting assembly (40), and the optical assembly (21) are aligned along a longitudinal axis (X),
**characterized in that** the mounting assembly (40) is configured to vary an inclination of the plane (E) of the gobo (51) relative to a reference plane (R) perpendicular to the longitudinal axis (X).

2. The gobo projector (1) according to claim 1, wherein the mounting assembly (40) comprises an adapter (42), configured to receive the gobo (51), and a mount (41), wherein the adapter (42) is removably connected to the mount (41) and is inclinable relative to the mount (41) to vary the inclination of the plane (E) of the gobo (51).

3. The gobo projector (1) according to claim 2, wherein the mounting assembly (40) comprises a plurality of spacers (43) positioned around the longitudinal axis (X), each spacer (43) being configured to vary a distance between the mount (41) and the adapter (42).

4. The gobo projector (1) according to claim 3, wherein the mount (41) has a front face (41a) for connectably receiving the adapter (42), a rear face (41b) opposite the front face (41a), and a plurality of through holes between the front face (41a) and the rear face (41b), each through hole being configured to receive a spacer (43) of the corresponding plurality of spacers, wherein each spacer (43) comprises a shank (431) extending between a first end (431a) and a second end (431b), the second end (431b) being operatively in contact with the adapter (42) and the first end (431a) protruding from the rear face (41b) of the mount (41).

5. The gobo projector (1) according to claim 4, wherein each shank (431) of each spacer (43) has a threaded coupling that connects it to the corresponding through hole, so that each spacer (43) can be extended or retracted along its own axis (X'), parallel to the longitudinal axis (X), by rotation about its axis (X').

6. The gobo projector (1) according to claim 5, wherein each spacer (43) of the plurality of spacers (43) includes a gripping element (432) at the first end (431a) of the shank (431) so that it can be adjusted manually.

7. The gobo projector (1) according to claim 6, wherein the mounting assembly (40) comprises a flange (413) and a plurality of spacing members (414), each of the plurality of spacing members (414) being positioned around the longitudinal axis (X) between the mount (41) and the flange (413) to space the mount (41) and the flange (413) from each other so as to define an open space accessible from the outside of the gobo projector (1).

8. The gobo projector (1) according to any one of claims 2 to 7, wherein the mount (41) comprises a plurality of magnetic elements (411) configured to couple the adapter (42) magnetically to the mount (41).

9. The gobo projector (1) according to any one of the preceding claims, wherein the frame (4) comprises a first rod (451) and a second rod (452), disposed around the longitudinal axis (X) and extending between a first end (431a, 432a) and a second end (431b, 432b), and wherein the optical assembly (21) is connected to the first end (431a) of the first rod (451) and of the second rod (452) to move relative to the mount (41) in translation along the longitudinal axis (X).

10. The gobo projector (1) according to any one of the preceding claims, wherein the adapter (42) is pivotally connected to the mount (41) to rotate about a first axis.

11. The gobo projector (1) according to any one of the preceding claims, wherein the mount (41) is configured to receive the gobo (51) and the mount (41) and is movably connected to the frame (4) so it can be inclined.

12. The gobo projector (1) according to any one of the preceding claims, comprising:
- a base (6), wherein the frame (4) is pivoted to the base (6) to rotate about an axis of rotation (Y) transverse to the longitudinal axis (X), and
- a tightening element (44) configured to lock the frame (4) at a desired angular position.

13. A method for using a gobo projector (1), wherein the gobo projector (1) comprises:
- a light source (31);
- a heat sink (33);
- an optical assembly (21);
- a frame (4);
- a mounting assembly (40),
wherein the heat sink (33), the light source (31), the mounting assembly (40), and the optical assembly (21) are aligned along a longitudinal axis (X),
the method comprising a step of fitting a gobo (51) having a flat shape and extending in a plane (E) in the mounting assembly (40), and being **characterized in that** it comprises a step of varying an inclination of the plane (E) of the gobo (51) relative to a reference plane (R) perpendicular to the longitudinal axis (X).

14. The method according to claim 13, wherein the mounting assembly (40) comprises an adapter (42), a mount (41) and a plurality of spacers (43) positioned around the longitudinal axis (X), wherein the step of fitting the gobo (51) includes a step of placing the gobo (51) in the adapter (42) and connecting the adapter (42) to the mount (41), and wherein the step of inclining the plane (E) includes a step of spacing the mount (41) and the adapter (43) from each other by a certain distance by means of the plurality of spacers (43).

15. The method according to claim 14, wherein each spacer (43) comprises a shank (431) extending between a first end (431a) and a second end (431b), and wherein the mount (41) has a front face (41) for connectably receiving the adapter (42), and a rear face (41b), opposite the front face (41a), and a plurality of through holes between the front face (41a) and the rear face (41b), the method comprising the following steps:
- receiving a spacer (43) of the plurality of spacers (43) in a corresponding through hole by means of a threaded coupling to the spacer (43), wherein the second end (431b) of the spacer (43) is operatively in contact with the adapter (42) and the first end (431a) protrudes from the rear face (41b) of the mount (41), and
- a step of extracting and retracting a spacer (43) along an axis (X') of the shank, parallel to the longitudinal axis (X), by rotation about the axis (X') of the shank.
